# EUROPÄISCHE PATENTANMELDUNG

(11) **EP 0 962 242 A1**
(43) Veröffentlichungstag der Anmeldung: **08.12.1999**
(21) Anmeldenummer: 98810515.1
(22) Anmeldetag: 05.06.1998
(51) Int. Cl.: B01D 37/02, B01D 35/14

(54) **Verfahren zum Filtrieren eines Getränkes und Anschwemmfilter**

(71) Anmelder: Filtrox AG, 9000 St. Gallen (CH)
(72) Erfinder: Schräder, Ulrich, Dr., 9034 Eggersriet (CH); Schröder, Harald, 9000 St. Gallen (CH)
(74) Vertreter: Hepp, Dieter

(57) **Zusammenfassung**

Die Erfindung offfenbart ein Verfahren, das es ermöglicht, das Erreichen eines festgelegten Maximalwertes in der räumlichen Ausdehnung von Filterkuchen (10) um hängend angeordnete zylindrische oder um aufeinander gestapelte horizontal angeordnete scheibenförmige Filterelemente (8) in Kesselfiltern in der Anschwemmfiltration nachzuweisen. Bei Erreichen dieses Maximalwertes wird die Zufuhr von Filterhilfsmittel (4) und/oder der zu filtrierenden Flüssigkeit (1) eingestellt.

## Beschreibung

Die vorliegende Erfindung bezieht sich auf ein verfahren zum Filtrieren einer Flüssigkeit in einem Anschwemmfilter und auf einen Anschwemmfilter gemäss den Merkmalen der Oberbegriffe der unabhängigen Ansprüche.

Anschwemmfilter mit zylinderförmigen, hängend angeordneten Filterelementen, sogenannte Kerzenfilter, sind seit langem bekannt und werden zusammen mit Filterhilfsmitteln in der Anschwemmfiltration von Getränken verwendet, wie beschrieben in EP 0 203 206 und DE 23 47 947.

Kerzenfilter bestehen überwiegend aus zylinderförmigen Behältern mit konusartig sich verjüngenden Enden, in die an gegenüberliegenden Seiten der Zu- und der Ablauf integriert sind. Eine im Behälter eingebaute Lochplatte dient neben der Abtrennung des Filtrat- vom Unfiltratraumes der Aufnahme der eingehängten zylinderförmigen Filterelemente.

Weiterhin sind in der Anschwemmfiltration seit langem Siebfilter mit horizontalen, scheibenförmigen Filterelementen bekannt und werden ebenfalls zusammen mit Filterhilfsmitteln in der Anschwemmfiltration von Getränken verwendet.

Siebfilter bestehen in der Regel aus zylinderförmigen Behältern mit aufeinander gestapelten mehreren scheibenförmigen Filterelementen, die zentral durch eine senkrechte Hohlwelle geführt sind und auf ihrer Oberseite ein feines Sieb aufweisen. Die aufeinander gestapelten Filterelemente sind als Ganzes mit der zentralen Welle drehbar. Die Reinigung der Filterelemente wird damit durch Fliehkräfte unterstützt.

Kerzen- und Siebfilter werden nachfolgend unter der gemeinsamen Bezeichnung Kesselfilter zusammengefasst.

Bei Inbetriebnahme der Filterelemente im Kesselfilter, d.h. bei Inbetriebnahme der Anlage zur Anschwemmfiltration, wird eine dünne Schicht von Filterhilfsmitteln auf die Filterelemente aufgebracht, was als Primäranschwemmung bezeichnet wird.

Nach Abschluss der Primäranschwemmung werden die hängend angeordneten Filterelemente im Kerzenfilter von aussen mit zu filtrierender Flüssigkeit und weiterem Filterhilfsmittel angeströmt. Die Filterhilfsmittel und abzutrennende Feststoffe werden auf der Oberfläche der Filterelemente zurückgehalten und erzeugen so eine während der Filtration ständig zunehmende Feststoffschicht, Filterkuchen genannt. Die Verwendung von Filterhilfsmitteln verhindert ein Undurchlässigwerden des Filterkuchens. Sie sorgen, trotz zunehmender Dicke des Filterkuchens für eine genügende Anzahl Kapillaren, die klein genug sind die Feststoffe aus der zu filtrierenden Flüssigkeit zurückzuhalten. Andererseits sind sie aber auch zahlreich genug, um eine weitgehend konstante Durchlässigkeit in Relation zur Kuchendicke zu gewährleisten. Nach Durchtritt durch das Filterelement wird das Filtrat über den Filtratraum nach oben abgeführt.

Ähnliches gilt für den Siebfilter. Nach Abschluss der Primäranschwemmung werden die horizontal angeordneten Filterelemente von aussen mit zu filtrierender Flüssigkeit und weiterem Filterhilfsmittel angeströmt. Bevorzugt aber nicht zwingend befindet sich die filtrierende Oberfläche auf der Oberseite der kreisringförmigen Filterelemente. Die Filterhilfsmittel und die abzutrennenden Feststoffe werden auf der Oberfläche der Filterelemente zurückgehalten und erzeugen so eine während der Filtration ständig zunehmende Feststoffschicht auf der Oberseite der Filterelemente, welche auch in diesem Fall als Filterkuchen bezeichnet wird. Nach Durchtritt durch den Filterkuchen wird die Flüssigkeit im Inneren der Filterelemente gesammelt und zur zentralen Hohlwelle hin geleitet, durch die sie schliesslich durch Öffnungen in den Filtratsammelkanal gelangt. Von dort wird das Filtrat wahlweise je nach Bauart nach oben oder nach unten aus dem Siebfilter abgeleitet.

Als Filterhilfsmittel werden beispielsweise Materialien wie natürliche Diatomeenerde, aus Diatomeenerde durch Kalzinierung gewonnene Kieselgur, Perlite, Cellulose, Kohle, Stärke, usw. verwendet. Die Materialien werden für ihren Einsatz als Filterhilfsmittel entsprechend aufbereitet und hinsichtlich ihrer Korngrössenverteilung und ihren Eigenschaften klassiert.

Filterhilfsmittel haben den Zweck, bei Suspensionen mit nur wenig Feststoffen die Bildung eines Filterkuchens zu ermöglichen. Enthalten die Suspensionen sehr feine Feststoffteile und/oder sind auch teilweise gelartige Inhaltsstoffe enthalten, so lockern die Filterhilfsmittel darüberhinaus den sich bildenden sehr dichten Kuchen auf. Insbesondere in der Filtration von Getränken üben die Filterhilfsmittel die eigentliche Filtrationswirkung aus bedingt durch Einlagerung der Feinstteilchen und der gelartigen Inhaltsstoffe in den Filterkuchen. Die Filterelemente im Kesselfilter dienen somit der möglichst effizienten Rückhaltung der Filterhilfsmittel und der Gewährleistung des Aufbaus der Filterkuchen.

Diese Filterhilfsmittel wirken alle überwiegend physikalisch mechanisch. Sie verändern also nur unwesentlich die chemisch Zusammensetzung der zu filtrierenden Flüssigkeit.

Der Dicke, des sich um die Filterelemente aufbauenden Filterkuchens, sind, abhängig vom vorhandenen Platz im Kesselfilter, Grenzen gesetzt. Dieser Platz wird in den technischen Daten als Trubvolumen angegeben.

Aufgrund von Wirtschaftlichkeitsüberlegungen sollte der vorhandene Platz für die Filterkuchen während der Filtration möglichst vollständig ausgenutzt werden. Dies kann dazu führen, dass die zulässige Grenze überschritten wird, d.h. dass durch Fehlbedienung eine zu grosse Menge an Filterhilfsmitteln oder anderen Feststoffen (z.B. Eiskristalle) in den Kesselfilter eingebracht wird. Zu grosse Mengen Filterhilfsmittel und die dadurch bedingte Überschreitung der zulässigen Dicke des Filterkuchens führt zu Deformationen der Filterelemente. Diese müssen daraufhin sowohl im Kerzenfilter als auch im Siebfilter unter erheblichem Kostenaufwand ausgetauscht werden.

Aufgabe der vorliegenden Erfindung ist es, ein Verfahren und eine Anlage zu entwickeln, die eine Deformation der Filterelemente durch einen Dickenaufbau des Filterkuchens über einen zulässigen Wert vermeidet, entsprechend der kennzeichnenden Merkmale der unabhängigen Ansprüche.

Dies wird erfindungsgemäss erreicht durch ein Verfahren zum Filtrieren eines Getränkes in einem Anschwemmfilter mit dem die Trubraumbeladung an mindestens einer vorbestimmbaren stelle im Anschwemmfilter, welcher mindestens ein Filterelement enthält, durch das Erreichen eines vorbestimmbaren Wertes der räumlichen Ausdehnung eines Filterkuchens an mindestens einem der Filterelemente durch mindestens einen veränderbaren Messparameter eines Detektionsmittels nachgewiesen wird. Die Kontrolle wird entweder zeitlich kontinuierlich oder in zeitlich diskreten Abständen durchgeführt.

Die maximale Trubraumbeladung ist eine spezifische Gerätekenngrösse.

Veränderungen des Parameters, der als Messwert des Detektionsmittels dient, bzw. das Überschreiten eines Sollwertes dieses Messparameters bewirken über ein Signal ein Einstellen der Zufuhr von Filterhilfsmittel und/oder der zu filtrierenden Flüssigkeit, insbesondere eines Getränks. Der jeweilige Sollwert des Messparameters ist abhängig von den gerätespezifischen Kenngrössen und ist individuell festzulegen.

Besonders vorteilhaft ist es, wenn durch ein einziges Detektionsmittel mehrere Filterkuchen überwacht werden. Dies lässt sich besonders einfach erreichen, wenn das Detektionsmittel einen räumlich gleichen Abstand zu benachbarten Filterkuchen besitzt. Durch eine solche symmetrische Anordnung wird eine gleiche Filterkuchendicke an den dem Detektionsmittel angrenzenden Filterelementen gewährleistet. Denkbar ist aber auch in gewissen Fällen gewollt unsymmetrischer Filterkuchendicken an den dem Detektionsmittel angrenzenden Filterelementen. Das Detektionsmittel ist dann zu verschieben relativ zu den angrenzenden Filterelementen. Weiterhin kann eine gemeinsame Kontrolle mehrerer Filterelemente durch Detektionsmittel bewerkstelligt werden, die an räumlich getrennten Stellen zwei und mehr in Schwingung versetzbare Teile aufweisen, die unabhängig voneinander arbeiten.

Bevorzugt wird in dem erfindungsgemässen Verfahren die Schwingungsamplitude und/oder Schwingungsfrequenz als veränderbarer Messparameter eines in Schwingung versetzbaren Detektionsmittels verwendet. Bei Berührung des Detektionsmittels mit dem sich in einer vorbestimmten Dicke aufgebauten Filterkuchen an mindestens einem Filterelement im Kesselfilter wird die Schwingungsamplitude abgedämpft, bzw. die Schwingungsfrequenz verändert. Vorteilhaft werden mehrere solche Detektionsmittel an verschiedenen Stellen und in verschiedenen Höhen zwischen den Filterelementen innerhalb eines Kesselfilters eingebaut.

Eine Veränderung des Messparameters des Detektionsmittels über einen oder unter vorbestimmten Sollwert, insbesondere ein entsprechendes Abdämpfen der Schwingungsamplitude, bzw. eine entsprechende Veränderung der Schwingungsfrequenz des in Schwingung versetzten Detektionsmittels hat ein sofortiges Abstellen der Filterhilfsmittelzufuhr und wahlweise der zu filtrierende Flüssigkeit zur Folge, womit eine Überladung des Kesselfilters mit Filterhilfsmittel vermieden wird.

Als ein Beispiel finden die Sensoren der Firma VEGA Grieshaber KG, die in Ausführungsformen von Schwingstäben und/oder Schwinggabeln erhältlich sind, Anwendung als Detektionsmittel. Diese Schwingstäbe und/oder -gabeln werden bevorzugt piezoelektrisch angetrieben und schwingen auf ihren mechanischen Eigenfrequenzen im Bereich von ca. 300 - 550 Hz. Dieser Frequenzbereich ist jedoch für eine erfolgreiche Kontrolle des Trubvolumens nicht erforderlich. Berühren die Filterkuchen nach bestimmtem Dickenaufbau den Schwingungsstab oder die Schwinggabel, so wird die Schwingamplitude gedämpft und eine integrierte Elektronik erfasst diese Dämpfung und löst einen Schaltbefehl in einer Steuerung aus, der das Abstellen wenigstens der Filterhilfsmittelzufuhr zur Folge hat. Eine Anhaftung der Filterhilfsmittel an den Sensor wird durch ein Wiederanschwingen mittels eines gepulsten Antriebsignales vermieden.

Teil der vorliegenden Erfindung ist weiterhin ein Anschwemmfilter mit einer Mehrzahl von Filterelementen in einer vorbestimmbaren Dichte, wobei zwischen den Filterelementen mindestens ein Detektionsmittel vorhanden ist, mit dem das Erreichen eines vorbestimmbaren Wertes der räumlichen Ausdehnung eines Filterkuchens an mindestens einem dieser Filterelemente nachgewiesen werden kann. Als Detektionsmittel wird vorteilhaft ein in Schwingung versetzbarer Sensor verwendet. Auch hierbei wird in einer bevorzugten Ausführungsform durch Abdämpfen der Schwingungsamplitude bzw. Veränderung der Schwingungsfrequenz, welche beide entweder getrennt oder aber auch gemeinsam als Messparameter im Detektionsmittels dienen können, das Erreichen einer bestimmten, nicht zu überschreitenden Dicke des Filterkuchens nachgewiesen. Bevorzugt wird der Anschwemmmfilter mit mehreren Detektionsmitteln an verschiedenen Stellen zwischen den Filterelementen ausgestattet.

Beim Überschreiten dieses Wertes wird über den Sensorkörper ein Signal ausgelöst, welches ein Einstellen der zufuhr von Filterhilfsmittel und/oder zu filtrierenden Getränk zur Folge hat.

Diese erfindungsgemässen Anschwemmfilter können in Form von Kerzenfilter oder als Siebfilter ausgeführt sein.

Sowohl für das erfindungsgemässe verfahren als auch für den erfindungsgemässen Anschwemmfilter finden auch Detektionsmittel die auf anderen Prinzipien beruhen wie z.B. Messung der elektrischen Leitfähigkeit, Widerstandsmessung, Reiflektion, Unterbruch eines Lichtstrahles etc. Anwendung. Alle Detektionsmittel können einzeln oder in Kombination miteinander verwendet werden.

Detektionsmittel, deren Detektionsprinzip auf der Unterbrechung eines oder mehrerer Lichtstrahlen beruht, sind in Form von Lichtschranken bekannt. Der Vorteil dieser Detektionsmittel beruht auf deren Fähigkeit, eine bestimmte Distanz entlang der Filterelemente zu kontrollieren. Im Gegensatz zu den in Schwingung versetzbaren Detektionsmitteln, die nur punktuell auf Überschreitung der zulässigen Filterkuchendicke ansprechen. Des weiteren ruft der Lichtstrahl keine bekannte physikalische Beeinflussung der Kuchenbildung und keine Veränderung der Strömungsbewegung an den Filterelementen hervor. Der geometrische Ort der Detektion ist hier nicht wie bereits beschrieben punktförmig, sondern entlang des Lichtstrahls und damit der Form der Filterelemente leicht anzupassen. Die Trübung der unfiltrierten Flüssigkeit, insbesondere Getränk, limitiert dabei den Anwendungsbereich. Sinnvollerweise werden der Lichtsender und -empfänger, welche die Lichtschranke und damit das Detektionsmittel ausbilden, an ausgewählten Stellen im Kesselfilter eingesetzt. Diese Stellen können z.B. die Überwachung einzelner Filterelemente beinhalten, bei denen aus Erfahrung am ehesten eine übermässige Ausdehnung des Filterkuchens erwartet wird. Dies kann im Siebfilter z.B. das oberste Filterelement und im Kerzenfilter ein am Aussenrand montiertes Filterelement sein.

Um die Anströmung der Filterelemente wenig zu stören, kann der Lichtsender/Lichtempfänger an Stellen im Kesselfilter angebracht werden, die für das Strömungsprofil nicht wesentlich sind. Dies können im Kesselfilter beispielsweise die Lochplatte, die Hohlwelle und die untere bzw. seitliche Konuswand sein. Vorteilhafter, weil mit geringerem Fertigungsaufwand ist die Installation eines kombinierten Lichtsenders und -empfängers in einem gemeinsamen Gehäuse. Zur Umlenkung des Lichtstrahls wird hierfür beispielsweise am anderen Ende der Filterelemente ein kleiner Spiegel angebracht. Bei Siebfiltern ist die Fixierung des kleinen Spiegels hygienisch und einfach an der zentralen Hohlwelle vornehmbar. Der Spiegel sendet den empfangenen Lichtstrahl zurück und kann z.B. fix oder nur geklemmt mit einem der Filterelemente bzw. der Hohlwelle verbunden werden.

Bei lichtempfindlichen Getränken kann bei Anwendung eines Lichtstrahls dessen Wellenlänge so gewählt werden, dass diese in einem Bereich liegt, der eine chemische Veränderung von Inhaltsstoffen aufgrund der Aufnahme von Lichtquanten ausschliesst, bzw. in vertretbaren Grenzen hält. Im Bier ist z.B. der durch intensives Sonnenlicht hervorgerufene Fehler als "Lichtgeschmack" bekannt. Dieser Lichtgeschmack tritt durch eine lichtinduzierte Veränderung der aus dem Hopfen kommenden Inhaltsstoffe des Bieres auf.

Anhand der nachfolgenden Figuren soll das erfindungsgemässe Verfahren und die erfindungsgemässe Anlage näher beschrieben werden. Die vorliegende Erfindung soll jedoch nicht auf die Figuren limitiert sein. Es zeigen:
- Figur 1: einen erfindungsgemässen Kerzenfilter, mit hängend angeordneten Filterelementen im schematischen Längsschnitt,
- Figur 2: einen Ausschnitt aus den hängend angeordneten zylindrischen Filterelementen im Querschnitt,
- Figur 3: die Ausführungsform des Detektionsmittels als Schwingstab,
- Figur 4: eine alternative Ausführung des Detektionsmittels als Schwinggabel,
- Figur 5: ein Detektionsmittel mit zwei in der Breite verstellbaren auch unabhängig voneinander in Schwingung versetzbaren Elementen,
- Figur 6: ein Detektionsmittel mit drei räumlich in Schwingung versetzbaren Elementen,
- Figur 7: eine alternative erfindungsgemässe Ausführungsform eines Kerzenfilters, und
- Figur 8: einen erfindungsgemässen Siebfilter.

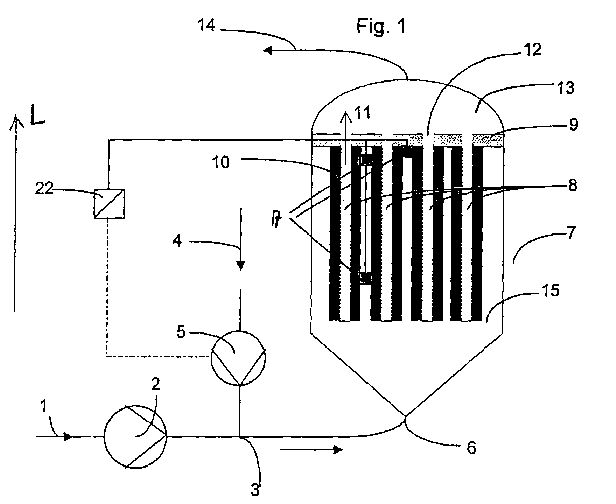

Bei dem in Figur 1 gezeigten Kerzenfilter 7 wird die zu filtrierende Flüssigkeit 1 mittels einer Pumpe 2 zum Mischungspunkt 3 befördert. Mit einer zweiten Pumpe 5 wird eine wässrige Suspension aus Filterhilfsmittel 4, welche auch eine Suspension aus Filterhilfsmittel und der zu filtrierenden Flüssigkeit 1 sein kann, ebenfalls zum Mischpunkt 3 befördert. Das Gemisch, Unfiltrat genannt, wird durch den unteren Einlauf 6 in den Kerzenfilter 7 gefördert. Das Unfiltrat umströmt innerhalb des Kerzenfilters 7 die hängend angeordneten Filterelemente 8. Die Filterelemente werden gehalten durch eine Lochplatte 9, die der Befestigung der Filterelemente 8 dient. Nach Durchtritt des Unfiltrats durch die um die Oberfläche der Filterelemente mittels der Filterhilfsmittel aufgebauten Filterkuchen 10 strömt das Filtrat 11 im Inneren der Filterelemente 8 durch die Öffnungen 12 in der Lochplatte 9 in den Filtratraum 13 des Kerzenfilters 7 und wird über die Ableitung 14 abgeführt. Die Lochplatte dient damit zusätzlich der Abtrennung des Unfiltratraumes 15 vom Filtratraum 13. Die Dosierung der Filterhilfsmittelsuspension 4 zu der zu filtrierenden Flüssigkeit 1 wird kontinuierlich oder in zeitlich diskreten Abständen durchgeführt.

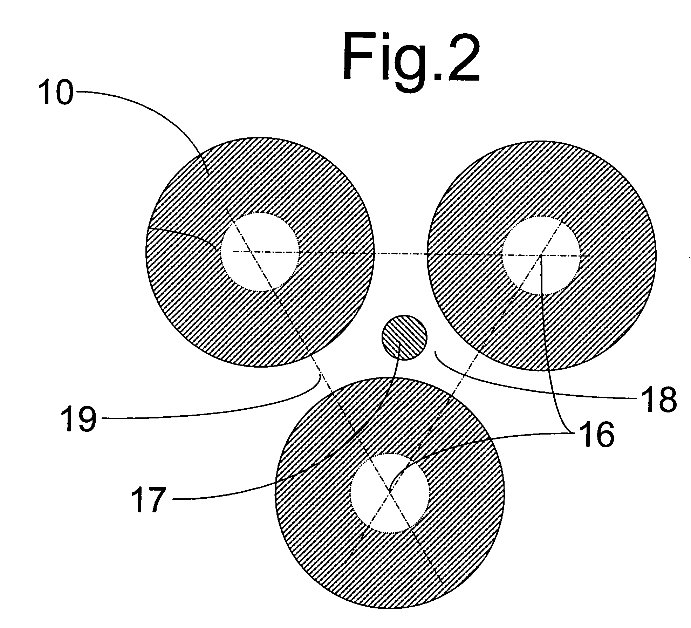

Figur 2 zeigt einen Ausschnitt der hängend angeordneten Filterelemente 8 im Querschnitt. Die Anordnung der Filterelemente 8 ist bevorzugt in der Art, dass die Zentren 16 jeweils dreier Filterelemente 8, gleichzeitig die Eckpunkte 16 eines gleichseitigen Dreieckes bilden. In Figur 1 und 2 sind weiterhin die sich aufbauenden Filterkuchen 10 skizziert. Ist die Dicke der Filterkuchen 10 so gross, dass die Filterkuchen 10 dreier Filterelemente 8 aneinanderstossen, so hat sich eine Schicht einer dichtesten Kugelpackung gebildet. Die Plazierung des in Schwingung zu versetzenden Detektionsmittels 17 geschieht nun bevorzugt in der Mitte des durch die Eckpunkte 16 gebildeten gleichseitigen Dreiecks. Diese Mitte entspricht der Mitte der freibleibenden Lücke in der dichtesten Kugelpackung. Die Grösse des Detektionsmittels 17 wird nun aus Sicherheitsgründen vorteilhaft so gewählt, dass die Dämpfung der Schwingungsamplitude, bzw. die Veränderung der Schwingungsfrequenz des Detektionsmittels 17 auch dann stattfindet, wenn sich die Oberflächen der sich um drei Filterelemente aufbauenden Filterkuchen 10 nicht berühren. Zwischen den Oberflächen benachbarter Filterkuchen 10 muss ein Spalt 19 verbleiben, dessen untere Grenze üblicherweise in einem Bereich von 1 bis 6 zum liegt.

Wird nun durch das Anwachsen des Filterkuchens 10 der Parameter, der als Messwert dient, verändert, so wird über die Steuerung 22 die Zufuhr des Filterhilfsmittels 4 bzw. der zu filtrierenden Flüssigkeit 1 eingestellt.

Da in der Praxis der Aufbau von Filterkuchen 10 über die Länge eines Filterelementes 8 auch bezüglich ihrer Dicke ungleichmässig erfolgen kann, sind die Detektionsmittel 17 nicht nur horizontal in den Hohlräumen der dichtesten Kugelpackung, d.h. zwischen den Filterelementen 8, verteilt, sondern auch vertikal entlang der longitudinalen Achse L der Filterelemente 8. Die Anzahl der über die longitudinale Achse L verteilten Detektionsmittel richtet sich nach der Länge der Filterelemente 8.

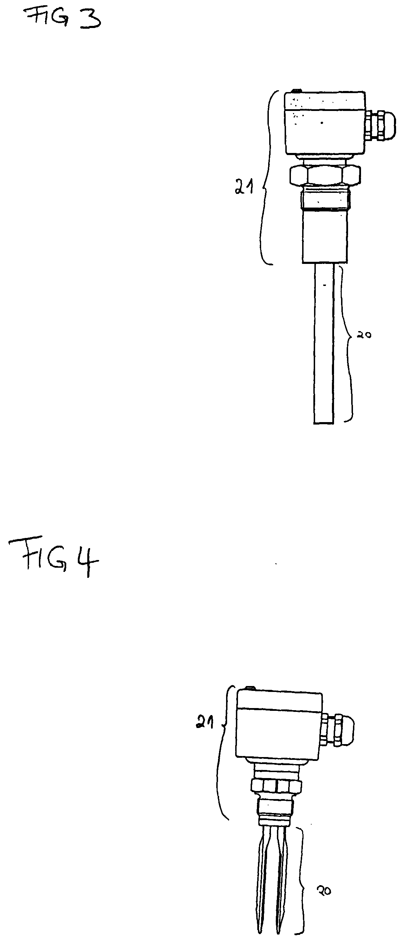

Figur 3, 4, 5 und 6 zeigen alternative Ausführungsformen von Detektionsmitteln 17. Diese bestehen aus in einer bestimmten Frequenz antreibbaren Fortsätze 20 und Antriebsvorrichtungen 21. In Figur 3 ist der in Schwingung zu versetzende Teil in Form eines Stabes und in Figur 4 in Form einer Gabel ausgeführt.

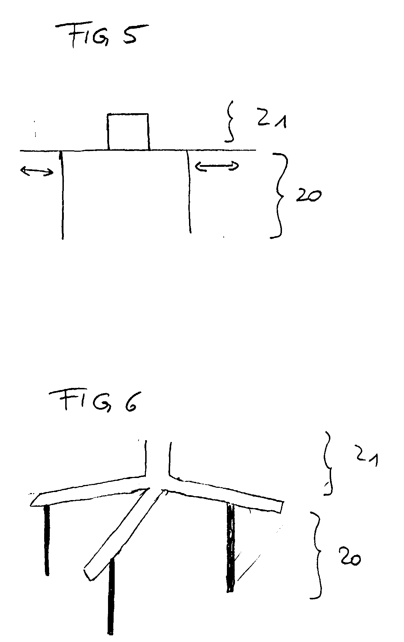

Anstatt den Maximalwert der Filterkuchendicke 10 durch die Packungsdichte der Filterelemente 8 festzulegen, ist alternativ eine Kontrolle der Filterkuchendicke 10 durch Breitenveränderung des Detektionsmittels 17 möglich wie in Abbildung 5 gezeigt. Der in Schwingung versetzbare Teil 20 ist in der Breite verstellbar.

Figur 6 zeigt eine alternative Ausführungsform eines Schwingstabes aus Figur 3. Dabei sind drei unabhängig in Schwingung versetzbare Stäbe an drei unterschiedlichen Armen des Detektionsmittels 17 gelagert. Diese Schwingstäbe können entweder gemeinsam oder unabhängig voneinander in Schwingung versetzt werden. Ebenso können sie unabhängig voneinander mit der Steuerung 22 verbunden sein.

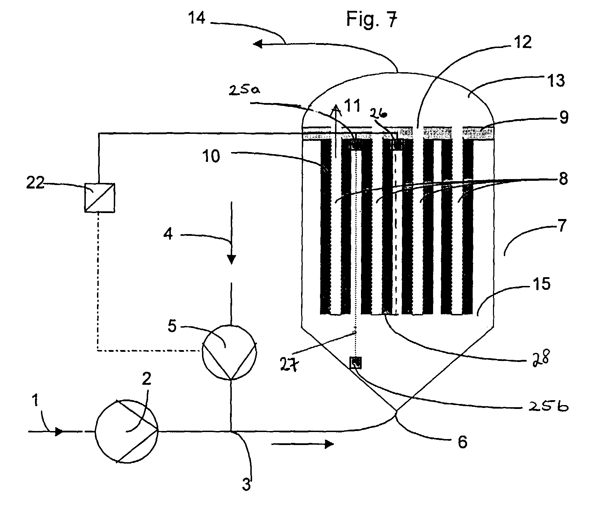

In Figur 7 ist ein Kerzenfilter 7 mit weiteren Formen von Detektionsmitteln 25a, 25b und 26 gezeigt. Das Detektionsmittel beruht auf dem Prinzip einer Lichtschranke, welche auf der Aussendung und dem Empfang eines Lichtstrahls bestimmter Wellenlänge basiert. Lichtsender und -empfänger 25a, 25b können getrennt voneinander installiert werden oder aber in einem gemeinsamen Gehäuse 26.

Die Befestigung des Lichtsenders 25a und Lichtempfängers 25b erfolgt in den strömungsberuhigten Zonen des Kerzenfilters 7. Die Anbringung des Lichtsenders 25a erfolgt in oder an die Lochplatte 9. Der Lichtempfänger 25b wird an der Wand des konusförmig ausgebildeten unteren Teils des Kerzenfilters 7 befestigt. Natürlich können Lichtsender 25a und Lichtempfänger 25b auch untereinander vertauscht sein. Der vom Lichtsender 25a ausgesandte Lichtstrahl 27 folgt entlang der longitudinalen Achse L des Filterelements 8. Die Position des Lichtstrahls 27 kontrolliert die Filterkuchendicke 10. Bei Unterbruch des Lichtstrahls 27 durch Überschreiten der vorbestimmten Dicke des Filterkuchens 10 erfolgt über die Steuerung 22 ein Unterbruch in der Zufuhr der Filterhilfsmittelsuspension 4 und gegebenenfalls der zu filtrierenden Flüssigkeit 1.

Figur 7 zeigt weiterhin den Einbau einer in einem einzigen Gehäuse kombinierten Lichtsenders und -empfängers 26. Der von dem Lichtsender ausgesandte Lichtstrahl 27 wird an einem am Ende eines Filterelementes 8 angebrachten Spiegel 28 reflektiert und auf den im Gehäuse 26 integrierten Lichtempfänger zurückgeworfen. Der Spiegel 28 kann natürlich auch an jeder beliebigen anderen geeigneten Stelle im Kerzenfilter 7 befestigt werden.

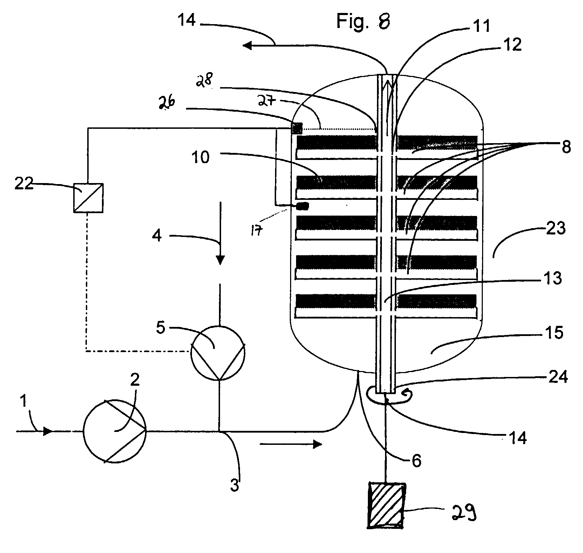

Figur 8 zeigt einen Siebfilter 23 im Längsschnitt. Die zu filtrierende Flüssigkeit 1 wird mittels einer Pumpe 2 zum Mischungspunkt 3 befördert. Mit einer zweiten Pumpe 5 wird eine wässrige Suspension aus Filterhilfsmittel 4, welche auch eine Suspension aus Filterhilfsmittel 4 und der zu filtrierenden Flüssigkeit 1 sein kann, ebenfalls zum Mischpunkt 3 befördert. Das Gemisch, Unfiltrat genannt, wird durch den unteren Einlauf 6 in den Siebfilter 23 gefördert. Der Einlauf muss allerdings nicht zwangsläufig immer im unteren Teil des Siebfilters 23 ein. Es gibt alternativ Ausführungsformen von Siebfiltern, bei denen der Einlauf 6 in den Siebfilter 23 im oberen Teil des Siebfilters 23 angebracht ist. Das Unfiltrat umströmt innerhalb des Siebfilters 23 die waagrecht angeordneten, aufeinander in einem bestimmten Abstand gestapelten Filterelemente 8. Die Filterelemente werden durch eine zentrale, um ihre Längsachse drehbar gelagerte Hohlwelle 24 gehalten. Zum Antrieb der Hohlwelle 24 ist oftmals an ihrem unteren Ende ein Antrieb 29 vorgesehen. Durch Antrieb der Hohlwelle 24 drehen sich ebenfalls die mit der Hohlwelle 24 befestigten Filterelemente 8. Nach Durchtritt des Unfiltrats durch die auf der Oberfläche der Filterelemente 8 aufgebauten Filterkuchen 10 strömt die filtrierte Flüssigkeit, das Filtrat 11, im Inneren der Filterelemente 8 durch die Bohrungen 12 in das Innere 13 der Hohlwelle 24, welches dem Filtratraum 13 zugerechnet wird. Das Filtrat 11 wird alternativ nach oben und/oder unten über die Ableitung 14 abgeführt. Die Hohlwelle 24 dient damit zusätzlich der Abtrennung des Unfiltratraumes 15 zum Filtratraum 13. Die Dosierung der Filterhilfsmittelsuspension 4 zu der zu filtrierenden Flüssigkeit 1 wird kontinuierlich oder in zeitlich diskreten Abständen durchgeführt.

Die in Figur 8 als Detektionsmittel 17 verwendete Lichtschranke 26 besteht wiederum aus einem in einem einzigen Gehäuse 26 integrierten Lichtsender und Lichtempfänger. Der Spiegel 28, der den ausgesandten Lichtstrahl 27 in der Weise reflektiert, dass er auf das Gehäuse 26 zurückgeworfen wird, wird auf der drehbaren Hohlwelle 24, an der die Filterelemente 8 unlösbar verbunden sind, befestigt. Bei einer Filterkuchendicke 10, die den vorbestimmbaren Wert überschreitet, wird der Lichtstrahl 27 unterbrochen und über eine Steuerung 22 die Zufuhr der Suspension des Filterhilfsmittels 4 und gegebenenfalls auch der zu filtrierenden Flüssigkeit 1 unterbrochen. Das langsame Drehen der Hohlwelle 24, dies kann während der Filtration zeitlich getaktet erfolgen, beeinflusst positiv den gleichmässigen Dickenaufbau des Filterkuchens 10 und die Detektierbarkeit der Filterkuchendicke über die gesamte Oberfläche des Filterelements.

## Patentansprüche

1. Verfahren zum Filtrieren eines Getränkes in einem Anschwemmfilter, dadurch gekennzeichnet, dass die Trubraumbeladung an wenigstens einer vorbestimmbaren Stelle im Anschwemmfilter, welcher wenigstens ein Filterelement (8) enthält, durch das Erreichen eines vorbestimmbaren Wertes der räumlichen Ausdehnung eines Filterkuchens (10) an mindestens einem Filterelement (8) durch mindestens einen veränderbaren Messparameter eines Detektionsmittels (17) nachgewiesen wird.

2. Verfahren nach Anspruch 1, dadurch gekennzeichnet, dass das Erreichen der maximalen räumlichen Ausdehnung des Filterkuchens (10) zeitlich kontinuierlich oder in zeitlich diskreten Abständen nachgewiesen wird.

3. Verfahren nach einem der Ansprüche 1 oder 2, dadurch gekennzeichnet, dass bei Erreichen des vorbestimmten Wertes der räumlichen Ausdehnung des Filterkuchens (10) die Veränderung des Messparameters des Detektionsmittels (17) über eine Steuerung (22) ein Einstellen der Zufuhr von Filterhilfsmittel (4) und/oder der zu filtrierenden Flüssigkeit (1) bewirkt.

4. Verfahren nach einem der Ansprüche 1 bis 3, dadurch gekennzeichnet, dass die Schwingungsamplitude als veränderbarer Messparameter eines in Schwingung versetzbaren Detektionsmittels (17) bei Berührung des Detektionsmittels (17) mit dem Filterkuchen (10) gedämpft wird und/oder dass die Schwingungsfrequenz als veränderbarer Messparameter besagten Detektionsmittels (17) bei Berührung des Detektionsmittels (17) mit dem Filterkuchen (10) nach vorbestimmbaren Dickenaufbau verändert wird.

5. Anschwemmfilter mit einer Mehrzahl von in einer vorbestimmbaren Dichte angeordneten Filterelementen (8), dadurch gekennzeichnet, dass zwischen den Filterelementen (8) mindestens ein Detektionsmittel (17) vorhanden ist zum Nachweis des Erreichens eines vorbestimmbaren Wertes der räumlichen Ausdehnung eines Filterkuchens (10) an mindestens einem Filterelement (8).

6. Anschwemmfilter nach Anspruch 5, dadurch gekennzeichnet, dass es ein Kerzen- (7) und/oder Siebfilter (23) ist.

7. Anschwemmfilter nach einem der Ansprüche 5 oder 6, dadurch gekennzeichnet, dass als Detektionsmittel (17) ein in Schwingung versetzbares Detektionsmittel vorgesehen ist, dessen Schwingungsamplitude bei Berührung des Detektionsmittels (17) mit dem in einer vorbestimmbaren Dicke aufgebauten Filterkuchen (10) mindestens eines Filterelementes (8) dämpfbar ist und/oder dessen Schwingungsfrequenz bei Berührung des Detektionsmittels (17) mit dem in einer vorbestimmbaren Dicke aufgebauten Filterkuchen (10) mindestens eines Filterelementes (8) veränderbar ist.

8. Anschwemmfilter nach einem der Ansprüche 6 oder 7, dadurch gekennzeichnet, dass als Detektionsmittel (17) eine Lichtschranke in Form eines Lichtsenders (25a) und Lichtempfängers (25b) einsetzbar ist. Zum Nachweis des Erreichens der vorbestimmbaren Dicke eines Filterkuchens (10) an mindestens einem Filterelement (8).

9. Anschwemmfilter nach Anspruch 8, dadurch gekennzeichnet, dass der Lichtsender und Lichtempfänger in einem gemeinsamen Gehäuse (26) integrierbar sind, wobei der vom Lichtsender (26) ausgesandte Lichtstrahl (27) mittels eines Spiegels (28) auf den Lichtempfänger (26) zurückreflektierbar ist.

10. Verwendung einer vorzugsweise mit ihrer Eigenfrequenz schwingenden Schwinggabel oder Schwingstabs als Detektionsmittel (17) und/oder von Lichtschranken in Anschwemmfiltern , insbesondere in Kerzen- (7) und/oder Siebfiltern (23), für die Detektion eines vorbestimmbaren Wertes der räumlichen Ausdehnung eines Filterkuchens (10) an mindestens einer vorbestimmbaren Stelle an mindestens einem Filterelement (8).
